# EUROPÄISCHE PATENTANMELDUNG

(11) **EP 0 893 163 A2**
(43) Veröffentlichungstag der Anmeldung: **27.01.1999**
(21) Anmeldenummer: 98113637.7
(22) Anmeldetag: 22.07.1998
(51) Int. Cl.: B05B 15/12

(54) **Wasserbetriebene Vorrichtung zum Aufnehmen und Absetzenlassen von Lackpartikeln**

(30) Priorität: 26.07.1997 DE 19732208
(71) Anmelder: OLT Oberflächen-, Luft- und Trocknungstechnik GmbH, 48629 Metelen (DE)
(72) Erfinder: Vollmer, Heinz-Georg, 48493 Wettringen (DE)
(74) Vertreter: Hoffmeister, Helmut, Dr. Dipl.-Phys.

(57) **Zusammenfassung**

Die Erfindung betrifft eine wasserbetriebene Vorrichtung zum Aufnehmen und Absetzenlassen von Lackpartikeln in einem Gemisch (200) aus untereinander adhäsiven, entweder suspendierten oder aufschwimmenden Lackpartikeln und Wasser, mit einem Strömungskanal (100) und Ruhezonen (21), sowie mit einer mit dem Strömungskanal verbundenen Rückführleitung (13). Die Vorrichtung ist mit wenigstens einer, die Strömung im Strömungskanal unterbrechenden und vom Wasser überströmten Staustufe (10.1, 10.2, 10.3, 10.4) versehen.

## Beschreibung

Die Erfindung betrifft eine wasserbetriebene Vorrichtung zum Aufnehmen und Absetzenlassen von Lackpartikeln in einem Gemisch aus untereinander adhäsiven, entweder suspendierten oder aufschwimmenden Lackpartikeln und Wasser, mit einem Strömungskanal und Ruhezonen, sowie mit einer mit dem Strömungskanal verbundenen Rückfuhrleitung.

Wasserbetriebene Vorrichtungen, die unter einer wasserbeflutenen Wand einer Spritzkabine oder eines Spritzstandes zur Auswaschung von Farbnebel bei dem Lackiervorgang angeordnet sind, sind bekannt (EP 0 529 151 B1). Die bekannte Vorrichtung besitzt einen abflußseitigen Querkanal, der an eine querüberflutete Strömungskante eines Wassersammelbeckens angrenzt. Der Querkanal ist zumindest im wassereingangsseitigen querüberfluteten Bereich der Strömungskante mit einem im wesentlichen horizontalen Flachströmungsabschnitt ausgebildet, dem sich die Abflußschräge anschließt. Die Lackpartikel sind untereinander adhäsiv, so daß sie sich untereinander verkleben und als "Lackinseln" auf der Wasseroberfläche schwimmend sich nicht benetzen und sich nicht absetzen lassen.

Trotz Zugabe eines Benetzungsmittels zum Wasser bleibt diese Erscheinung erhalten, weil die bekannte wasserbetriebene Vorrichtung nicht zu einer ausreichenden und umfassenden Benetzung der Lackteilchen führt. Die aus dem Wasser herausragende trockene Oberseite der Lacke bleibt weiterhin klebrig und läßt weitere Farbkörperteilchen anhaften, so daß diese zu einer dicken und nicht entklebten Lackschicht agglomerieren. Bei einer bestimmten Größe ist das Gewicht des Lackschlammkuchens größer als seine Auftriebskraft. Er sinkt zu Boden und kann nur noch manuell entfernt werden.

Es stellt sich demnach die Aufgabe, bei einer wasserbetriebenen Vorrichtung dafür zu sorgen, daß schwimmende Lackschlammkuchen ohne Benetzung und mit hoher interner Adhäsion nicht mehr entstehen.

Diese Aufgabe wird gelöst bei einer wasserbetriebenen Vorrichtung der eingangs genannten Art, die dadurch gekennzeichnet ist, daß die Vorrichtung mit wenigstens einer, die Strömung im Strömungskanal unterbrechenden und vom Wasser überströmten Staustufe versehen ist.

Durch die Staustufe, die nicht nur eine einfache Überfließkante ist, wird eine Wasserwalze erzeugt, die die schwimmenden Lackteilchen mitreißt, untertaucht, zerreißt und benetzt.

Zusätzlich kann dem Wasser ein Koagulierungsmittel zugefügt werden, das, wie an sich bekannt, die Klebrigkeit der Lackpartikel verringert, trotzdem aber durch schwache Adhäsionskräfte eine Koagulierung und "Haufenbildung" der abgesetzten Lackteilchen erleichtert.

Mit Vorteil wird nicht nur eine Staustufe, sondern mehrere, kaskadenartig angeordnete Staustufen hintereinander geschaltet. Hierbei wird vorzugsweise das Überfließniveau von einer Staustufe zur anderen um 0,05 bis 0,2 m differieren. Dabei ist wesentlich, daß hinter der einen bzw. hinter jeder Staustufe eine überkippende Wasserwalze entsteht, in der aufschwimmende Lackteilchen in und unter das Wasser hineingezogen werden, so daß sie benetzen und den Schwimmzustand aufgeben.

Üblicherweise sind drei bis sechs derartige Staustufen ausreichend, nach und alle aufschwimmenden und verklebten Lackteilchen zu benetzen und zum Absinken zu bringen.

Zur Verringerung des Platzbedarfes wird vorgeschlagen, den Strömungskanal mäanderförmig auszubilden, wobei vorzugsweise Staustufen in den Bereichen der Mäanderumlenkungen liegen. Die Umlenkung dem Strömungskanals in den Mäandern sollte jeweils 180° betragen.

Vor den Staustufen bildet sich eine Ruhezone, in der ein Teil der Lackpartikel abgelagert wird. Durch entsprechende Schieber oder Becherförderer läßt sich aus diesen Bereichen der abgesunkene Schlamm entfernen. Die Standardausführung ist daher durch Staustufen gekennzeichnet, die aus einer Prallwand besteht, die bis zum Grund des Strömungskanals reicht.

Eine leichteres Ausbringen des Schlammes läßt sich mit einer Ausführungsform durchführen, bei der wenigstens ein Teil der Staustufen aus einer Prallwandkombination gebildet ist, die jeweils aus einer ersten, bis zum Grund des Strömungskanals reichenden Prallwand und einer nachgeschalteten, mit ihrer Unterkante einen Abstand zum Grund wahrenden zweiten Prallwand besteht. Hierbei wird eine Strömung geschaffen, bei der vor der bis zum Grund des Strömungskanals reichenden Prallwand sich ein Teil des abgesunkenen Schlamms jeweils sammelt. Aus dieser Position kann der Schlamm entfernt werden. Ist dann die erste Prallwand heb- und senkbar angeordnet, so kann durch eine Spülströmung bei angehobenen Prallwänden der Schlamm in den Endbereich des Strömungskanals gespült werden und dort nach Absinkenlassen aus einem Bereich entfernt werden. Hierzu können auch entsprechende Sumpfpumpen vorgesehen werden, die den abgesetzten Schlamm nach unten abziehen.

Zur weiteren Strömungslenkung kann der Grund des Strömungskanals auch mit Bodenwellen oder Bodenstufen versehen werden, so daß die sich ergebende Strömungswalze intensiviert ist. Derartige Bodenwellen sollten mit ihrem Scheitel jeweils vor einer Staustufe liegen.

Da erfahrungsgemäß die Farbpartikel-Flotte noch gashaltig ist, wird vorgeschlagen, daß zu Beginn der Strömungskanäle eine Venturiauswaschung zur Abscheidung von Feinststäuben aus dem Rohgas im Bereich der bzw. oberhalb der ersten Staustufe angeordnet ist.

Ausführungsbeispiele der Erfindung werden anhand der Zeichnungen erläutert. Die Figuren der Zeichnung zeigen im einzelnen:
- Fig. 1: in schematischer Darstellung eine wasserbetriebene Vorrichtung im Anschluß an eine wasserberieselte Spritzkabinenwand;
- Fig. 2: in schematischer Darstellung eine Vorrichtung mit mäanderförmigem Strömungskanal;
- Fig. 3: eine Ausführungsform eines Strömungskanals mit Bodenwellen, und
- Fig. 4: eine Ausführungsform eines Strömungskanals mit Bodenstufen.

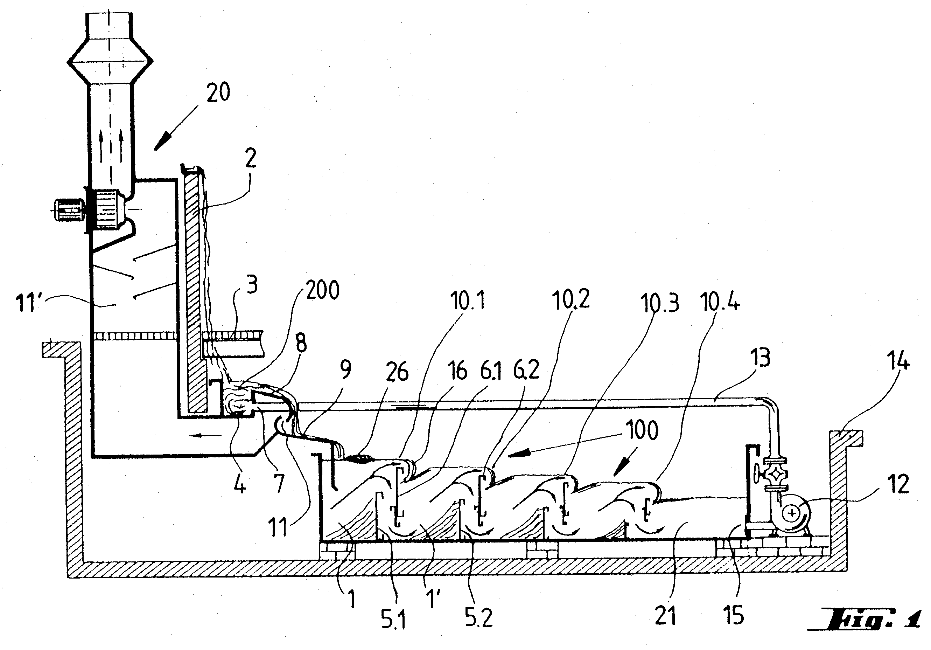

In Fig. 1 ist eine an sich bekannte, wasserberieselte Spritzkabinenwand 2 dargestellt, an der aus Farbnebeln stammende Lackpartikel sich abscheiden und durch einen Gitterrostboden 3 zusammen mit dem Rieselwasser nach unten geführt werden. Das Wasser 200 mit den Lackpartikeln sammelt sich in einer Abwasserrinne 4 und strömt über eine schräggestellte Überlaufkante 8, prallt auf eine Ablauftraufe 9 auf und strömt in den Strömungskanal 100. Zwischen Überlaufkante 8 und Abströmtraufe 9 ist ein Durchlaß gelassen. Durch diese Venturiauswaschung 11 können im Abwasser vorhandene Lack-Feinststaubteilchen abgesaugt und entsprechend abgeschieden werden. Hierzu ist ein Abführkanal 11' vorgesehen.

In Fig. 1 ist ein Strömungskanal 100 dargestellt, der aus mehreren linear hintereinander geschalteten Abschnitten besteht, die jeweils durch eine Staustufe 10.1, 10.2, 10.3 und 10.4 begrenzt sind. Die Staustufen werden vom Wasser überströmt. Die Staustüfe besteht im Ausführungsbeispiel gemäß Fig. 1 aus einer unteren Prallwand 5.1,5.2, die auf dem Grund des Strömungskanals 100 aufsteht, und aus einer nachgeschalteten, mit ihrer Unterkante einen Abstand zum Grund wahrenden zweiten Prallwand 6.1,6.2. Die Prallwand 6.1,6.2 wiederum ist aus zwei zusammengefügten Einzelblechen hergestellt, um Höhenvariationen leichter durchführen zu können.

Das von der Abströmtraufe 9 gelangende Wasser findet vor der ersten Prallwand 5 eine Ruhezone 1. Das Wasser strömt dann weiter und wird in eine Wasserwalze 16 überführt, die die aufschwimmenden Lackpartikel-Inseln unter das Wasser reißt und drückt, so daß diese zerrissen und benetzt werden. Die nunmehr in der Ruhezone 1' absinkenden Lackpartikel lagern sich vor der Prallwand 5.2 an. Weiteres Wasser wird über die nächste Prallwand der Staustufe 10.2 geführt, wobei das Überfließniveau um etwa 0,05 bis 0,2 m differiert. Diese kaskadenartige Anordnung der Staustufen mit immer weiter abgesenktem Überfließniveau führt zu einer starken Benetzung und Untertauchen von zusammengeklebten Lackinseln, die zerreißen und sich ablagern, so daß am Schluß der kaskadenartigen Anordnung im Bereich der Ruhezone 21 nur noch wenige Lackteilchen sich am Grund absetzen oder aufschwimmen.

Über ein Mundstück 15 einer Pumpe 12, die an einer Rücklaufleitung 13 angeschlossen ist, wird dann das weitgehend gereinigte Wasser rückgeführt und bei 7 wieder der Wassermenge 200 beigefügt. Nur die geringe Wassermenge, die durch Restfeuchte und Verdunstung verlorengeht, muß kontinuierlich ergänzt werden.

Die Rieselwand sowie die zum Strömungskanal gehörenden Einzelteile sind aus wasserrechtlichen Gründen in ein Sicherheitsbecken 14 eingefaßt.

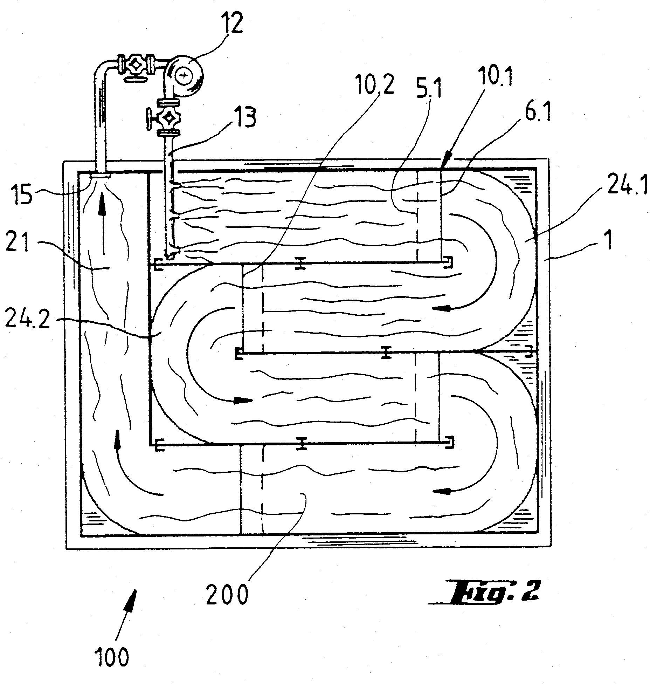

Fig. 2 zeigt in Draufsicht eine vom Prinzip her ähnliche wasserbetriebene Vorrichtung wie Fig. 1. Der Strömungskanal 100 ist hier allerdings mäanderförmig ausgebildet. Staustufen, ähnlich wie sie in Fig. 1 dargestellt sind, liegen vorzugsweise in den Bereichen der Mäanderumlenkungen 24.1 und 24.2. Die Staustufen 10.1 und 10.2 und weitere bestehen ebenso wie bei dem Ausführungsbeispiel gemäß Fig. 1 aus einer unteren Prallwand 5.1 und einer nachgeschalteten Prallwand 6.1, so daß sich auch hier eine Ablagerung der abgesunkenen Partikel ergibt.

Bei den Ausführungsbeispielen gemäß Fig. 1 und Fig. 2 ist die vordere (untere) Prallwand 5.1, 5.2 höhenverstellbar ausgerüstet. Dadurch ist möglich, daß bei abgeschalteter Zuströmung von Wasser 200 eine Spülströmung erzeugt werden kann, die bei hochgezogenen Prallwänden 5.1, 5.2 den vor diesen Prallwänden liegenden Lackschlamm in den Bereich der Ruhezone 21 spült, wo er sich sammelt und dann durch eine Sumpfpumpe oder über ein Kettenförderwerk (nicht dargestellt) herausgefördert werden kann.

Es sei aber ausdrücklich angemerkt, daß ein Betrieb im Sinne der Erfindung auch möglich ist, wenn die Staustufen nur aus Prallwänden bestehen, die auf dem Grund aufstehen oder mit ihrer Unterkante einen Abstand zum Grund wahren.

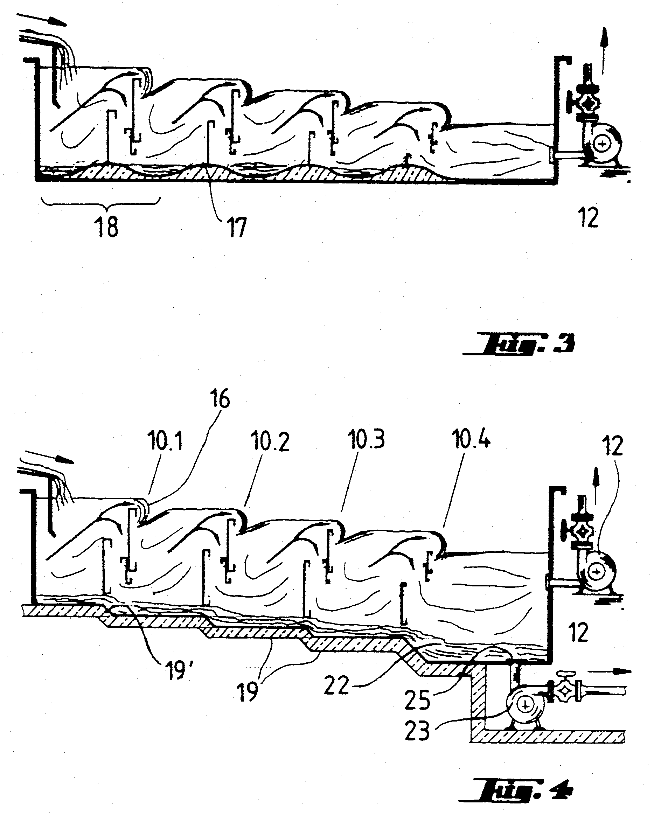

In Fig. 3 ist ein Ausführungsbeispiel dargestellt, bei dem der Grund des Strömungskanals, der geradlinig, gebogen oder mäanderförmig angeordnet sein kann, auch mit Bodenwellen 18 versehen werden kann, die so angeordnet sind, daß vor den Prallwänden eine beruhigte Zone vorhanden ist, während nach den Prallwänden eine Verengung des Strömungsweges sich ergibt, die ein besseres Mitreißen und Benetzen der Lackpartikelchen ermöglicht.

Die Scheitel 17 der vorgenanten Bodenwellen sollten jeweils vor den Staustufen liegen.

Fig. 4 zeigt eine weitere Ausführungsform. Hierbei ist die kaskadenartige Anordnung der Staustufen dadurch hergestellt, daß die Prallwände, die einen gewissen Abstand zum Boden wahren, jeweils am Ende einer Bodenstufe 19 angeordnet sind, die in einen Fallbereich 19' endet.

Die Prallwände 10.1, ..., 10.3 können sowohl höhenverstellbar als auch nach Art von Wehren auf den Boden aufgesetzt werden, so daß sich oberhalb die erwünschte Wasserwalze 16 bildet.

Mit Hilfe einer Sumpfpumpe 23 und einem Abflußrohr 25 kann der sich im Sumpf 22 gebildete Schlamm abgesaugt und einer Entsorgung oder einem Recycling zugeführt werden.

Die Funktion der vorgenannten Vorrichtung sei noch einmal kurz erläutert:

Das aus der Abwasserrinne 4 kommende Wasser vermischt sich mit dem anströmenden Rohgas und wird in der sich anschließenden Venturiauswaschung 11 intensiv verwirbelt und gelangt dann an die erste Staustufe 10.1, nachdem es in der Ruhezone 1 schon zu einem ersten Absetzen von Schlamm gekommen ist. Aufschwimmende Lackteilchen-Inseln 26 werden in die Wasserwalze 16 hineingerissen, untergetaucht und durch Turbulenz- und Auftriebskräfte zerrissen. Sie werden benetzt und koagulieren leichter und bilden in der Ruhezone 1' eine Schlammablagerung. Die weiteren kaskadenartigen Staustufen sorgen für weitere Wasserwalzen und damit auch für die Benetzung der restlich verbleibenden Lackpartikel-Inseln.

Das Austragen der sich ansammelnden Lackschlämme wird entweder durch Becherförderer oder aber durch entsprechende Sumpf-Absaugpumpen durchgeführt. In einer besonderen Ausführungsform ist es auch möglich, eine Spülung der Lackteilchen in einen speziellen, hinteren Ruhebereich durchzuführen, der mit einer Sumpfpumpe ausgestattet ist (vgl. Fig. 4).

Durch die Rezirkulation des Wassers werden Wasserverluste und -kontaminationen gering gehalten.

### Bezugszeichenliste:

- 100: Strömungskanal
- 200: Wasser
- 2: wasserberieselte Spritzkabinenwand
- 3: Gitterrostboden
- 4: Abwasserrinne
- 5: erste, untere Prallwand
- 5',5'': Ruhezone
- 6: zweite Prallwand
- 7: Einlaufstutzen
- 8: Überlaufkante
- 9: Abströmtraufe
- 10.1...10.4: Staustufe
- 11: Venturiauswaschung
- 11': Abführkanal
- 12: Pumpe
- 13: Rücklaufleitung
- 14: Sicherheitsbecken
- 15: Mundstück
- 16: Wasserwalze
- 17: Bodenwellenscheitel
- 18: Bodenwelle
- 19: Bodenstufe
- 19': Fallbereich
- 20: Gasabsaugung
- 21: Ruhezone
- 23: Schlammaustragspumpe
- 24.1...24.4: Mäanderumlenkung
- 25: Abflußrohr
- 26: Lackteilchen-Inseln

## Patentansprüche

1. Wasserbetriebene Vorrichtung zum Aufnehmen und Absetzenlassen von Lackpartikeln in einem Gemisch (200) aus untereinander adhäsiven, entweder suspendierten oder aufschwimmenden Lackpartikeln und Wasser, mit einem Strömungskanal (100) und Ruhezonen (21), sowie mit einer mit dem Strömungskanal verbundenen Rückfuhrleitung (13),
dadurch gekennzeichnet, daß die Vorrichtung mit mehreren, kaskadenartig angeordneten, die Strömung im Strömungskanal unterbrechenden und vom Wasser überströmten Staustufen (10.1, 10.2, 10.3, 10.4) versehen ist.

2. Vorrichtung nach Anspruch 1, dadurch gekennzeichnet, daß das Wasser mit einem Koagulierungsmittel versetzt ist.

3. Vorrichtung nach Anspruch 1 oder 2, dadurch gekennzeichnet, daß das Überfließniveau von einer Staustufe zur anderen um 0,05 bis 0,2 m differiert.

4. Vorrichtung nach Anspruch 1 bis 3, dadurch gekennzeichnet, daß in dem Strömungskanal (100) drei bis sechs Staustufen (10) angeordnet sind.

5. Vorrichtung nach Anspruch 1 bis 4, dadurch gekennzeichnet, daß der Strömungskanal (100) mäanderförmig ausgebildet ist, wobei vorzugsweise Staustufen (10) in den Bereichen der Mäanderumlenkungen (24.1, 24.2) liegen.

6. Vorrichtung nach Anspruch 5, dadurch gekennzeichnet, daß die Umlenkung des Strömungskanals (100) in den Mäandern jeweils 180° beträgt.

7. Vorrichtung nach Anspruch 1 bis 6, dadurch gekennzeichnet, daß wenigstens ein Teil der Staustufen aus einer Prallwand (5) besteht, die mit ihrer Unterkante einen Abstand zum Grund wahrt.

8. Vorrichtung nach Anspruch 1 bis 7, dadurch gekennzeichnet, daß wenigstens ein Teil der Staustufen aus einer Prallwandkombination gebildet ist, die jeweils aus einer ersten unteren, bis zum Grund des Strömungskanals reichenden Prallwand (5) und einer nachgeschalteten, mit ihrer Unterkante einen Abstand zum Grund wahrenden zweiten Prallwand (6) besteht.

9. Vorrichtung nach Anspruch 8, dadurch gekennzeichnet, daß die untere Prallwand (5) heb- und senkbar ist.

10. Vorrichtung nach wenigstens einem der vorhergehenden Ansprüche, dadurch gekennzeichnet, daß der Grund des Strömungskanals mit Bodenwellen (18) oder Bodenstufen (19) versehen ist.

11. Vorrichtung nach Anspruch 10, dadurch gekennzeichnet, daß die Bodenwellen-Scheitel (17) jeweils vor einer Staustufe (10) liegen.

12. Vorrichtung nach wenigstens einem der vorhergehenden Ansprüche, dadurch gekennzeichnet, daß zu Beginn des Strömungskanals eine Vorrichtung (29) zur Abscheidung von Feinststaub oberhalb der (ersten) Staustufe (10.1) angeordnet ist.
